# EUROPEAN PATENT SPECIFICATION

(11) **EP 2 189 328 B1**
(45) Date of publication and mention of the grant of the patent: **14.03.2012**
(21) Application number: 09176543.8
(22) Date of filing: 19.11.2009
(51) Int. Cl.: B60N 2/46

(54) **Vehicle command armrest assembly**
Armstützenanordnung für Fahrzeugführung
Ensemble d'accoudoir de commande de véhicule

(30) Priority: 20.11.2008 US 274888
(43) Date of publication of application: 26.05.2010
(73) Proprietor: DEERE & COMPANY, Moline, Illinois 61265-8098 (US)
(72) Inventor: Steege, Scott Charles, Ankeny, IA 50021 (US); Bartz, Shawn M, Waterloo, IA 50702 (US)
(74) Representative: Dehnhardt, Florian Christopher

(56) References cited:
- DE-A1-102005 023 890
- US-A1- 2004 133 322
- US-A1- 2006 042 857

## Description

The present invention relates to a vehicle command armrest assembly.

Current production tractors have a command armrest which includes a plurality of control devices, such as lever switches and knobs which are used to control various functions on or coupled to the tractor. It is known to couple a joystick control unit to such a command armrest for controlling functions of a loader. In a current production tractor, a joystick control unit is mounted to the front of the command armrest by several screws. The process to install the joystick control unit is quite time consuming because the command armrest needs to be disassembled, holes drilled, and then components reassembled. The disassembly creates the opportunity for parts to be damaged and or misplaced. Because of the difficulty in assembly of the joystick control unit to the command armrest, the joystick control unit stays attached all the time, regardless if a loader is being used or not. This can become a nuisance for the operator and block some visibility over the front of the command armrest. It is desired to have a command armrest assembly which simplifies the coupling and uncoupling of a joystick control unit and other auxiliary units or modules to the command armrest.

The joystick control unit is also not positioned in an ergonomic friendly position. For most operators, their elbow is positioned over a hole or other switches on the command armrest top, when they are operating the joystick control unit. This does not provide support for the elbow and becomes fatiguing after a short period of use.

A known armrest is disclosed in US-A-2004/0133322 and US-A-2006/0042857.

Accordingly, an object of this invention is to provide an command armrest assembly to which auxiliary units can be quickly and easily attached, removed and adjusted.

This is solved by an armrest according to claim 1.

For a complete understanding of the objects, techniques, and structure of the invention reference should be made to the following detailed description and accompanying drawings, wherein similar components are designated by identical reference numerals:
- Fig. 1: is an upper perspective view of a vehicle command armrest assembly embody- ing the invention,
- Fig. 2: is a lower perspective view of the vehicle command armrest assembly accord- ing to Fig. 1,
- Fig. 3: is an upper perspective view of an armrest base unit of the vehicle command armrest assembly according to Fig. 1 with an upper panel removed,
- Fig. 4: is an upper perspective view of the armrest base unit of the vehicle command armrest assembly according to Fig. 1 with an upper panel removed and show- ing auxiliary units mounted thereto, and
- Fig. 5: is a sectional view of the armrest base unit according to Fig. 4 taken along in- tersection line 5-5.

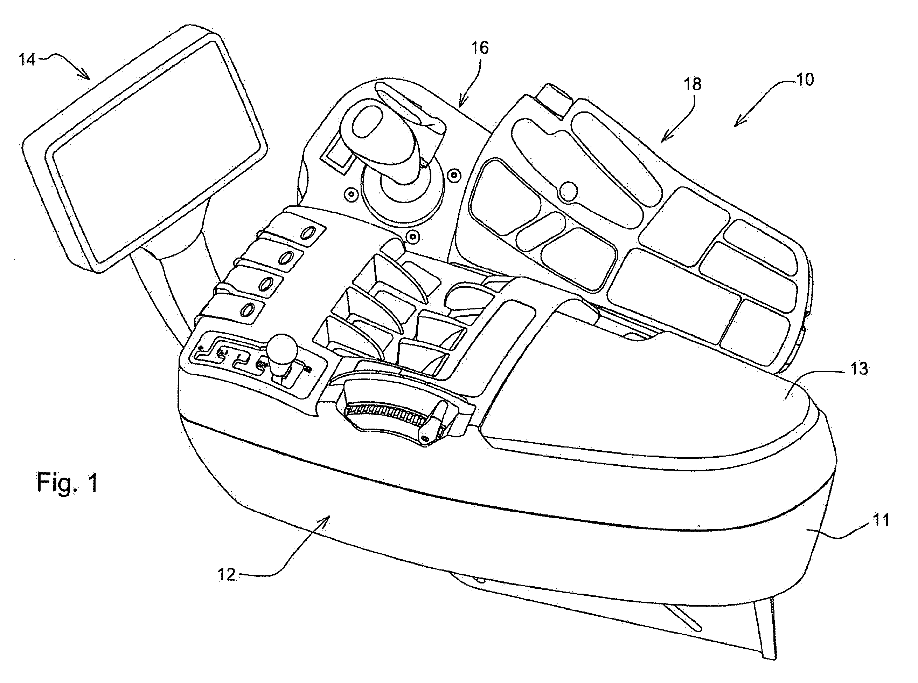

Referring to Figs. 1, 2 and 4, a vehicle command armrest assembly 10 includes an armrest base unit 12. As is well known, the armrest base unit 12 is preferably part of a vehicle seat assembly so that armrest base unit 12 pivots and moves with the seat (not shown). Coupled to the armrest base unit 12 is a touchpad and/or display unit 14, a joystick control unit 16 and a command system module (CMS) 18. Other types of auxiliary units or modules could be attached to the armrest base unit 12.

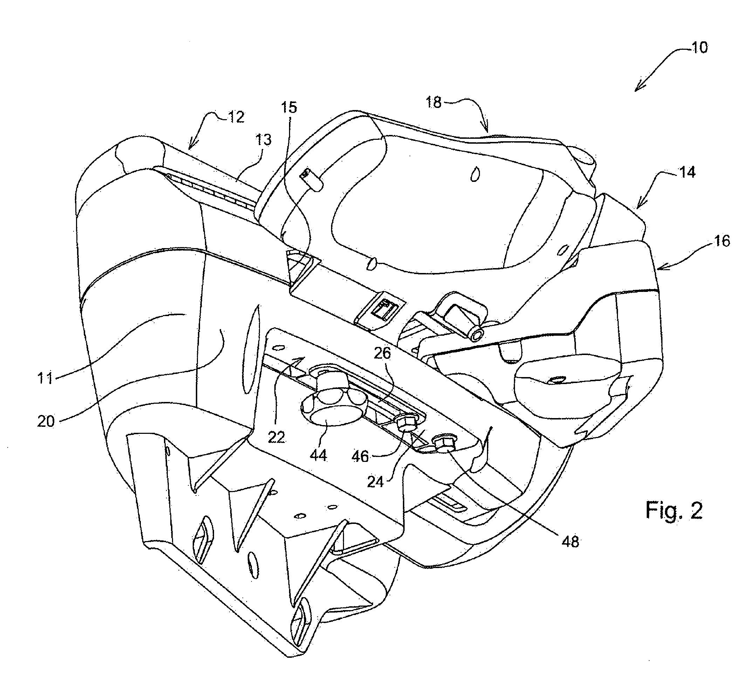

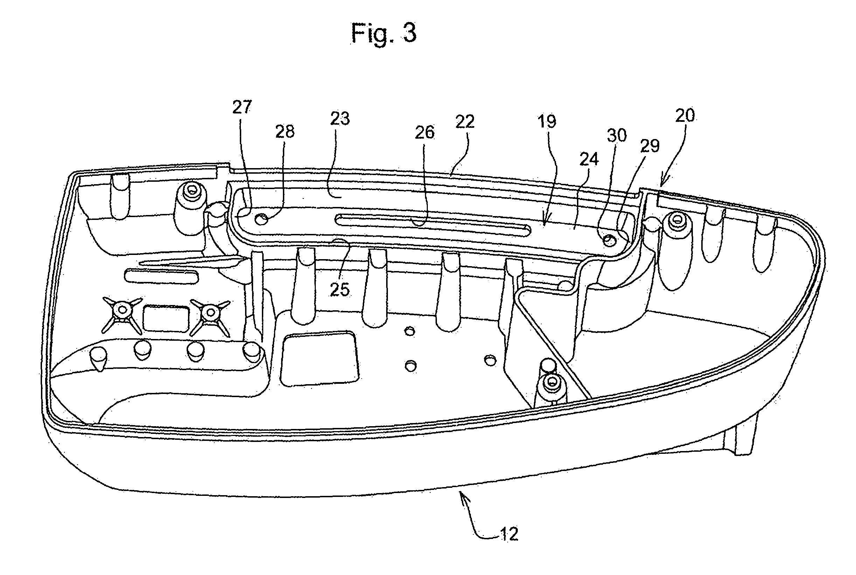

As best seen in Figs. 2 and 3, the armrest base unit 12 includes a tub 11 and a top cover 13. Tub 11 and top cover 13 form an opening 15 in a side portion 20 thereof. The side portion 20 of the tub 11 includes a channel member 22 which forms an upwardly opening channel 19 with a bottom surface 24 and sloping side walls 23 and 25. The bottom surface 24 includes an elongated slot 26 and a pair of bores 28 and 30 formed therein. The channel member 22 is closed at both ends by end walls 27 and 29.

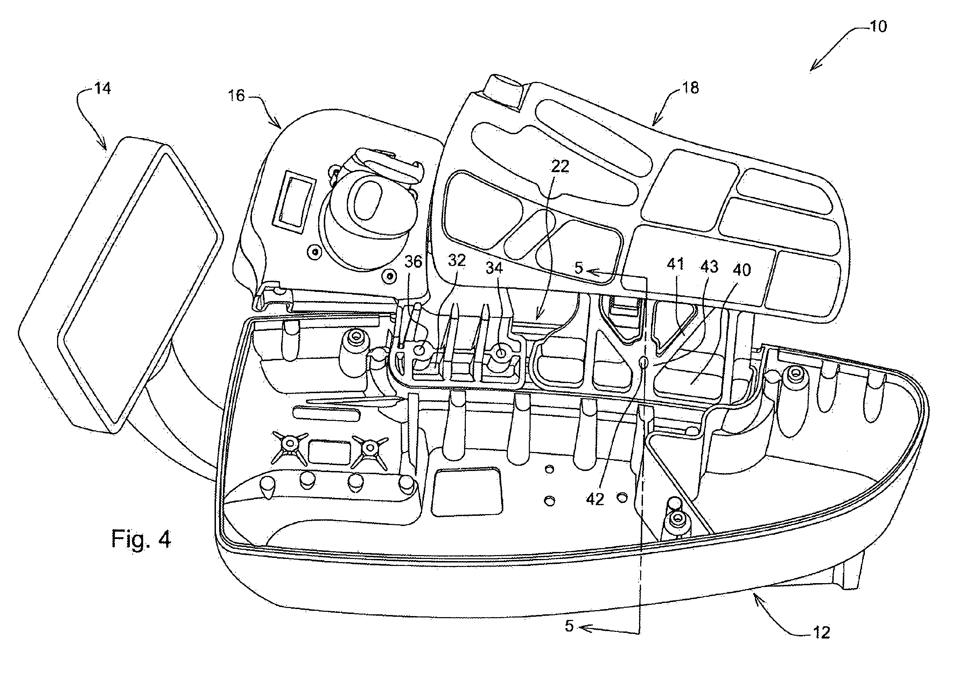

Referring now to Fig. 4, joystick control unit 16 includes a support or attachment member 32 which is removably received by an end of the channel member 22. A pair of threaded bores 34 and 36 are formed in a bottom surface of attachment member 32. Command system module 18 includes an attachment member 40 which is removably and slidably received by the channel member 22. Attachment member 40 includes a plurality of reinforcing ribs 41 which join together at a center portion 43. A threaded bore 42 is formed in the center portion 43 of attachment member 40.

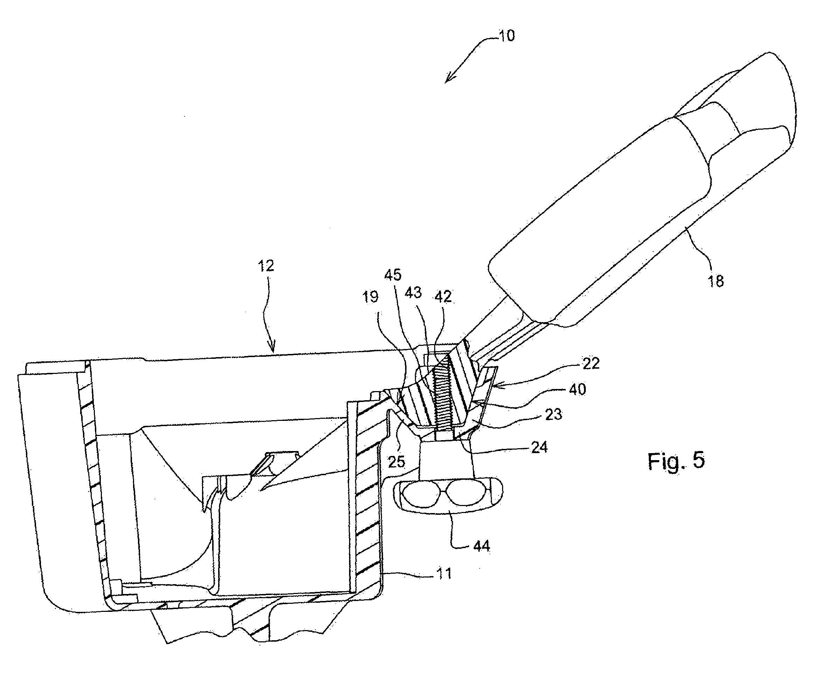

As best seen in Fig. 2, a knob 44 includes a threaded shaft 45 (shown in Fig. 5) which extends through the elongated slot 26 and is screwed into the threaded bore 42. Bolt 46 extends through elongated slot 26 and is screwed into threaded bore 34. Bolt 48 extends through bore 28 and is screwed into threaded bore 36.

As best seen in Fig. 5, the channel member 22 and the attaching member 40 have V- or U-shaped cross-sectional characteristic so that the attaching member 40 mates or fits snugly into the channel member 22.

With this assembly, auxiliary units or modules, such as the joystick control unit 16 and/or the command system module 18, can be quickly and easily be assembled to the armrest base unit 12, and or interchanged with each other.

The U- or V-shaped cross-sectional characteristic of channel member 22 allows the command system module 18 to be secured to the armrest base unit 12 by a single screw. With knob 44, this screw can be easily loosened and the command system module 18 can be slid forward or rearward to accommodate different operators in a seat (not shown) and optimize the ergonomic feel and position of the command system module 18.

The joystick control unit 16 can easily be installed onto the armrest base unit 12 by inserting the attachment member 32 into the channel member 22 and attaching the two screws 46 and 48 from the bottom. No drilling of the channel member 22 is required. A joystick wire harness (not shown) may be inserted into the rear of the command system module 18. With this design, the command armrest assembly 10 does not need to be disassembled at all. The operator can easily remove the joystick control unit 16 when it will not be needed for improved ergonomics for the command system module 18.

The unique shape of the channel member 22 also allows for other attachments (not shown) to be assembled to the armrest base unit 12, such as additional displays, monitors, or controllers that may be needed by the operator. The advantage of mounting these to the command armrest assembly 10 is they are close to the operator and will move when the seat (not shown) is swiveled, so they remain within reach at all times.

The joystick control unit 16 is now positioned to the side of the armrest base unit 12 and in a position that all operators can keep their elbows on the soft cushion on top of the armrest base unit 12. It is also in a position that the operator can leave the elbow in one position and pivot the arm between the joystick control unit 16 and different control devices on the armrest base unit 12.

## Claims

1. A vehicle command armrest assembly having an armrest base unit (12) and at least one auxiliary unit (16, 18) mounted to the armrest base unit (12), the armrest base unit (12) having a side portion (20) forming a channel member (22), and the at least one auxiliary unit (16, 18) having an attachment member (32, 40) which is received by and coupled to the channel member (22), **characterized in that** an elongated slot (26) is formed in a bottom surface (24) of the channel member (22), and a fastener member (44, 45, 46) extends through the attachment member (32, 40) and the elongated slot (26).

2. The assembly according to claim 1, **characterized in that** a bore (34, 42) is formed in a bottom surface of the attachment member (32, 40), and the fastener member (44, 45, 46) extends through the bore (34, 42) and the elongated slot (26).

3. The assembly according to claims 1 to 2, **characterized in that** the attachment member (32, 40) and the channel member (22) have mating V- or U-shaped cross-sectional characteristic.

4. The assembly according to claims 1 to 3, **characterized in that** the channel member (22) forms an upwardly opening channel (19).

5. The assembly according to claims 1 to 4, **characterized in that** the attachment member (40) is slidable within the channel member (22).

6. The assembly according to claims 1 to 5, **characterized by** a first auxiliary unit (16) mounted to the armrest base unit (12), the first auxiliary unit (16) having a first attachment member (32) which is received by and coupled to the channel member (22), and a second auxiliary unit (18) mounted to the armrest base unit (12), the second auxiliary unit (18) having a second attachment member (40) which is slidably received by and coupled to the channel member (22).

7. The assembly according to claims 2 and 6, **characterized in that** a threaded bore (34, 36) is formed in a bottom surface of the attachment member (32); and a fastener member (46, 48) extends through the channel member (22) and the threaded bore (34, 36) and is screwed into the first auxiliary unit (16).

8. The assembly according to claim 6 or 7, **characterized in that** a fastener member (44, 45) extends through the channel member (22) and the elongated slot (26) and is screwed into the second auxiliary unit (18).

## Patentansprüche

1. Armstützenanordnung für Fahrzeugführung mit einer Armstützenbasiseinheit (12) und mindestens einer Nebeneinheit (16, 18), die an der Armstützenbasiseinheit (12) montiert ist, wobei die Armstützenbasiseinheit (12) einen Seitenabschnitt (20) hat, der ein Kanalglied (22) bildet, und die mindestens eine Nebeneinheit (16, 18) ein Anbringglied (32, 40) hat, das vom Kanalglied (22) aufgenommen und daran gekoppelt ist, **dadurch gekennzeichnet, dass** ein länglicher Schlitz (26) in einer Bodenfläche (24) des Kanalglieds (22) gebildet ist und sich ein Befestigungselementglied (44, 45, 46) durch das Anbringglied (32, 40) und den länglichen Schlitz (26) erstreckt.

2. Anordnung nach Anspruch 1, **dadurch gekennzeichnet, dass** eine Bohrung (34, 42) in einer Bodenfläche des Anbringglieds (32, 40) gebildet ist und sich das Befestigungselementglied (44, 45, 46) durch die Bohrung (34, 42) und den länglichen Schlitz (26) erstreckt.

3. Anordnung nach Ansprüchen 1 bis 2, **dadurch gekennzeichnet, dass** das Anbringglied (32, 40) und das Kanalglied (22) zusammenpassende V- oder U-förmige Querschnittsmerkmale haben.

4. Anordnung nach Ansprüchen 1 bis 3, **dadurch gekennzeichnet, dass** das Kanalglied (22) einen sich nach oben öffnenden Kanal (19) bildet.

5. Anordnung nach Ansprüchen 1 bis 4, **dadurch gekennzeichnet, dass** das Anbringglied (40) im Kanalglied (22) gleitbar ist.

6. Anordnung nach Ansprüchen 1 bis 5, **gekennzeichnet durch** eine erste Nebeneinheit (16), die an der Armstützenbasiseinheit (12) montiert ist, wobei die erste Nebeneinheit (16) ein erstes Anbringglied (32) hat, das vom Kanalglied (22) aufgenommen und daran gekoppelt ist, und eine zweite Nebeneinheit (18), die an der Armstützenbasiseinheit (12) montiert ist, wobei die zweite Nebeneinheit (18) ein zweites Anbringglied (40) hat, das vom Kanalglied (22) gleitend aufgenommen und daran gekoppelt ist.

7. Anordnung nach Ansprüchen 2 und 6, **dadurch gekennzeichnet, dass** eine Gewindebohrung (34, 36) in einer Bodenfläche des Anbringglieds (32) gebildet ist und sich ein Befestigungselementglied (46, 48) durch das Kanalglied (22) und die Gewindebohrung (34, 36) erstreckt und in die erste Nebeneinheit (16) geschraubt ist.

8. Anordnung nach Anspruch 6 oder 7, **dadurch gekennzeichnet, dass** sich ein Befestigungselementglied (44, 45) durch das Kanalglied (22) und den länglichen Schlitz (26) erstreckt und in die zweite Nebeneinheit (18) geschraubt ist.

## Revendications

1. Ensemble d'accoudoir de commande de véhicule, comportant une unité de base d'accoudoir (12) et au moins une unité auxiliaire (16, 18) montée sur l'unité de base d'accoudoir (12), l'unité de base d'accoudoir (12) ayant une partie latérale (20) formant un élément de canal (22), et l'au moins une unité auxiliaire (16, 18) ayant un élément d'attachement (32, 40) qui est reçu par l'élément de canal (22) et accouplé à ce dernier, **caractérisé en ce qu'**une fente allongée (26) est formée dans une surface inférieure (24) de l'élément de canal (22), et un élément de fixation (44, 45, 46) s'étend à travers l'élément d'attachement (32, 40) et la fente allongée (26).

2. Ensemble selon la revendication 1, **caractérisé en ce qu'**un alésage (34, 42) est formé dans une surface inférieure de l'élément d'attachement (32, 40), et l'élément de fixation (44, 45, 46) s'étend à travers l'alésage (34, 42) et la fente allongée (26).

3. Ensemble selon la revendication 1 ou 2, **caractérisé en ce que** l'élément d'attachement (32, 40) et l'élément de canal (22) ont des caractéristiques de section transversale en forme de V ou de U complémentaires.

4. Ensemble selon les revendications 1 à 3, **caractérisé en ce que** l'élément de canal (22) forme un canal (19) s'ouvrant vers le haut.

5. Ensemble selon les revendications 1 à 4, **caractérisé en ce que** l'élément d'attachement(40) peut coulisser à l'intérieur de l'élément de canal (22).

6. Ensemble selon les revendications 1 à 5, **caractérisé par** une première unité auxiliaire (16) montée sur l'unité de base d'accoudoir (12), la première unité auxiliaire (16) ayant un premier élément d'attachement (32) qui est reçu par l'élément de canal (22) et accouplé à ce dernier, et une deuxième unité auxiliaire (18) montée sur l'unité de base d'accoudoir (12), la deuxième unité auxiliaire (18) ayant un deuxième élément d'attachement (40) qui est reçu de manière coulissante par l'élément de canal (22) et accouplé à ce dernier.

7. Ensemble selon les revendications 2 et 6, **caractérisé en ce qu'**un alésage fileté (34, 36) est formé dans une surface inférieure de l'élément d'attachement (32) ; et un élément de fixation (46, 48) s'étend à travers l'élément de canal (22) et l' alésage fileté (34, 36) et est vissé dans la première unité auxiliaire (16).

8. Ensemble selon la revendication 6 ou 7, **caractérisé en ce qu'**un élément de fixation (44, 45) s'étend à travers l'élément de canal (22) et la fente allongée (26) et est vissé dans la deuxième unité auxiliaire (18).
